# EUROPÄISCHE PATENTSCHRIFT

(11) **EP 1 272 081 B1**
(45) Veröffentlichungstag und Bekanntmachung des Hinweises auf die Patenterteilung: **04.05.2005**
(21) Anmeldenummer: 01929365.3
(22) Anmeldetag: 26.02.2001
(51) Int. Cl.: A47J 43/07

(54) **HAUSHALTSGERÄT**
HOUSEHOLD DEVICE
APPAREIL ELECTROMENAGER

(30) Priorität: 31.03.2000 DE 10016303
(43) Veröffentlichungstag der Anmeldung: 08.01.2003
(73) Patentinhaber: BSH Bosch und Siemens Hausgeräte GmbH, 81739 München (DE)
(72) Erfinder: PAVLOVIC, Henrik, 3333 Ljubno ob Savinji (SI); ZIBRET, Igor, 3327 Smartno ob Paki (SI)
(86) Internationale Anmeldenummer: PCT/EP2001/002179
(87) Internationale Veröffentlichungsnummer: WO 2001/074217

(56) Entgegenhaltungen:
- FR-A- 1 201 685
- FR-A- 2 265 332
- GB-A- 834 764
- US-A- 5 779 358

## Beschreibung

Die Erfindung betrifft ein Haushaltsgerät, insbesondere Küchenmaschine, das ein aus mindestens zwei zusammenfügbaren Gehäuseteilen bestehendes Gehäuse aufweist, in dem ein elektrisches Arbeitselement eingebaut ist, dessen elektrischer Kreis ein durch ein außen am Gehäuse angeordnetes Betätigungselement betätigbares Steuerglied enthält.

Haushaltsgeräte, wie beispielsweise Küchenmaschinen, besitzen ein in der Regel aus zwei zusammenfügbaren Gehäuseteilen bestehendes Gehäuse. Am einen Gehäuseteil (Gehäuseunterteil) ist beispielsweise als Arbeitselement ein Antriebsmotor angeordnet und an dem anderen Gehäuseteil (Gehäuseoberteil) ein Betätigungsknopf oder -knebel zum Betätigen eines im Stromkreis des Antriebsmotors als Steuerglied angeordneten Schatters. Dieser Schalter kann räumlich entweder an dem Gehäuseunterteil bzw. an der Außenseite des am Gehäuseunterteil angebauten Antriebsmotors oder auch an der Innenseite des Gehäuseoberteiles angeordnet sein. Im letzten Fall bestehen gewisse Schwierigkeiten hinsichtlich der Herstellung der elektrischen Verbindungen zwischen dem Schalter und dem Antriebsmotor. Im anderen Fall lassen sich zwar die elektrischen Verbindungen zwischen dem Antriebsmotor und dem Schalter wegen deren unmittelbaren Nachbarschaft leicht herstellen, jedoch führt das Ankoppeln des Betätigungsknopfes bzw. -knebels an den Schalter wegen vorhandener Toleranzabweichungen bei dem Zusammenfügen der Gehäuseteile zu Problemen.

Der Erfindung liegt die Aufgabe zugrunde, ein Haushaltsgerät der eingangs beschriebenen Art so auszubilden, daß es weder hinsichtlich der elektrischen Verbindung des im Stromkreis des Arbeitselementes liegenden Steuergliedes noch hinsichtlich der mechanischen Ankoppelung des Betätigungselementes an das Steuerglied zu Schwierigkeiten kommt.

Die Lösung der gestellten Aufgabe gelingt nach der Erfindung dadurch, daß das Steuerglied an einem schwimmend direkt oder indirekt an dem einen Gehäuseteil angeordneten Trägerteil befestigt ist, daß an dem anderen Gehäuseteil mindestens ein Ausrichtelement vorgesehen ist, welches beim Zusammenfügen der Gehäuseteile mit einem am Trägerteil vorhandenen Gegenausrichtelement in Eingriff kommt, daß die Lage des Ausrichtelementes an dem anderen Gehäuseteil in Bezug zu einer an diesem Gehäuseteil für das Anbringen des Betätigungselementes vorgesehenen Montageöffnung steht. Durch die Anordnung des Steuergliedes an dem einen Gehäuseteil lassen sich die elektrischen Verbindungen zwischen diesem Steuerglied und dem am gleichen Gehäuseteil angebauten Arbeitselement problemlos herstellen. Beim Zusammenfügen der Gehäuseteile erfolgt durch das an dem anderen Gehäuseteil angebrachte Ausrichtelement im Zusammenwirken mit dem an dem Tragteil vorgesehenen Gegenausrichtelement eine entsprechende Ausrichtung des Trägerteiles. Durch die entsprechende Lage des Ausrichtelementes in Bezug auf die Montageöffnung für das Betätigungselement ist dann sicher gestellt, daß das Steuerelement in eine mit der räumlichen Lage des Betätigungselementes übereinstimmende Lage gelangt. Damit bereitet auch das Ankoppeln des Betätigungselementes an das Steuerglied keine Schwierigkeiten.

Ein entsprechendes Ausrichten des Trägerteiles wird in jedem Falle dadurch sichergestellt, daß das Trägerteil in Aufsteckrichtung des anderen Gehäuseteiles federnd und in der um 90° gegen diese Aufsteckrichtung versetzten Richtung verschiebbar an dem einen Gehäuseteil angeordnet ist. Infolge der federnden Aufhängung des Trägerteiles kann dieses so an dem einen Gehäuseteil angeordnet werden, daß es beim Zusammenfügen der beiden Gehäuseteile mit Sicherheit zu einem Eingriff des Ausricht- und Gegenausrichtelementes kommt und das Trägerteil damit in eine durch das Ausrichtelement des anderen Gehäuseteiles definierte Lage in Bezug auf diese Gehäuseteil kommt. Damit ist dann auch die Lage des in die Montageöffnung einsetzbaren Betätigungselementes in Bezug auf das am Trägerteil angeordnete Steuerglied definiert.

Eine besonders zweckmäßige Gestaltung des Ausricht- und Gegenausrichtelementes ergibt sich dadurch, daß an dem Trägerteil als Gegenausrichtelement ein mit Einlaufschrägen versehener Schacht vorgesehen ist, dessen Lage in Bezug zu dem an dem Trägerteil angeordneten Steuerglied steht, daß femer an dem anderen Gehäuseteil als Ausrichtelement eine nasenförmige, in den Schacht passende Leiste vorgesehen ist. Durch die Einlaufschrägen wird sichergestellt, daß es trotz Maßabweichungen zu einem Aufeinandertreffen dieser Element beim Zusammenfügen der Gehäuseteile kommt.

Eine weitere Verbesserung beim Ausrichten der entsprechenden Teile wird dadurch erreicht, daß an dem Trägerteil als weitere Gegenausrichtelemente aus der Ebene des Trägerteiles vorstehende stiftartige Vorsprünge vorgesehen sind, deren Lage ebenfalls in Bezug zu der Lage des Steuergliedes steht, daß an dem anderen Gehäuseteil schräg verlaufende Leisten vorgesehen sind, die beim Zusammenfügen der beiden Gehäuseteile pfeilartig zwischen die stiftartigen Vorsprünge greifen und an diesen entlanggleiten. Durch die weiteren Gegenausrichtetemente können auch höhere Verstellkräfte bewältigt werden.

Eine für die Verstellung sowohl in waagerechter als auch senkrechter Richtung besonders geeignete Ausführungsform ist dadurch gekennzeichnet, daß das Trägerteil mindestens drei in Aufsteckrichtung des anderen Gehäuseteiles federnd ausgebildete Tragarme aufweist, die in der zu der Aufsteckrichtung um 90° versetzten Richtung verschiebbar an dem einen Gehäuseteil befestigt sind.

Dadurch, daß an dem Trägerteil eine das Steuerglied enthaltende Leiterplatte angebracht ist, sind auch die für die Steuerung bzw. Regelung des elektrischen Arbeitselementes notwendigen Bauelemnete an einer geeigneten, keine weiteren Verdrahtungsaufwand erfordernden Stelle plazierbar.

Ist als Arbeitselement ein Antriebsmotor vorgesehen, dann kann in vorteilhafter Weise das Trägerteil an der Außenseite des Antriebsmotors angeordnet sein.

Aus konstruktiven Gesichtspunkten ist es vorteilhaft, daß an dem anderen Gehäuseteil ein gesondertes, als Ausrichtelement dienendes Bauteil vorgesehen ist, welches in seiner Lage an dem anderen Gehäuseteil auf die Montageöffnung für das Betätigungselement hin ausgerichtet ist. Ein solches in seiner Formgestalt relativ kompliziertes Bauteil kann unabhängig vom Gehäuse wesentlich leichter hergestellt werden und braucht dann lediglich an dem Gehäuse montiert zu werden. Dies kann wiederum ohne großen Aufwand dadurch geschehen, daß das Bauteil mittels entsprechender Rastelemente in der Montageöffnung gehalten ist.

Toleranzabweichungen wirken sich auf das Ankoppeln des Betätigungselementes an das Steuerglied dadurch weniger aus daß das Betätigungselement von der Außenseite des Gehäuses her in der Montageöffnung direkt mit dem Bauteil verbindbar ist. Auf diese Weise wirken sich Maßabweichungen hinsichtlich der Anbringung des Bauteiles an dem anderen Gehäuseteil nicht beim Ankoppeln des Betätigungselementes an das Steuerglied aus.

Dadurch, daß das Betätigungselement durch eine Rastverbindung mit dem Bauteil verbindbar ist, ist eine einfache, wenig Aufwand erfordernde Montage des Betätigungselementes möglich.

Anhand eines in der Zeichnung dargestellten Ausführungsbeispieles wird die Erfindung nachfolgend noch näher erläutert. Es zeigt:

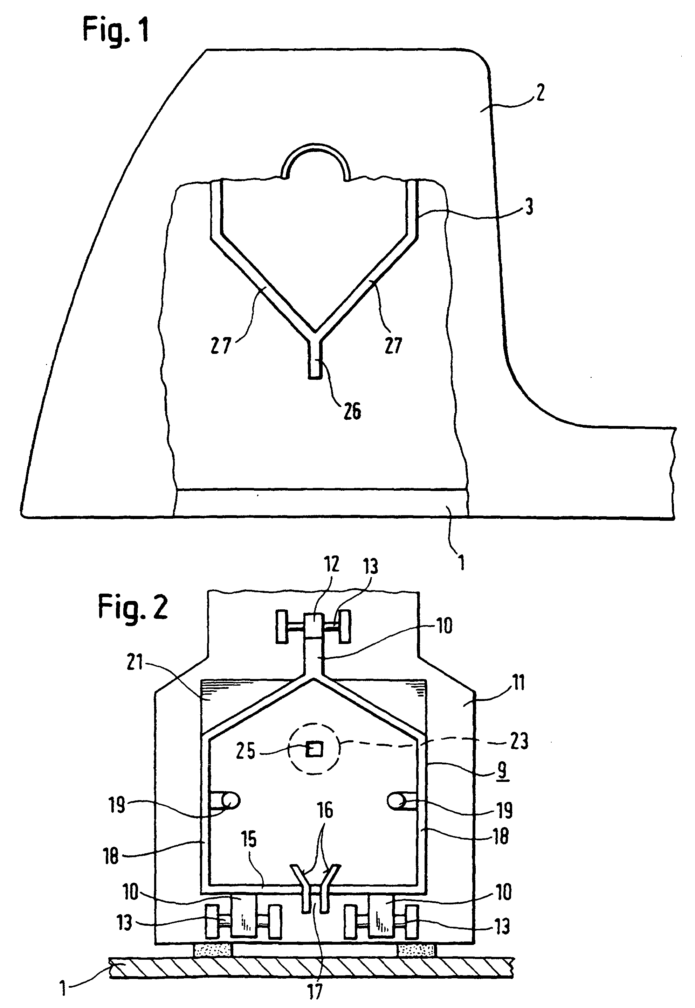

- Fig. 1: in einem Aufriß die Anordnung eines Ausrichtelementes an dem entsprechenden Gehäuseteil,
- Fig. 2: die Anordnung eines Trägerteiles an dem Antriebsmotor einer Küchenmaschine,

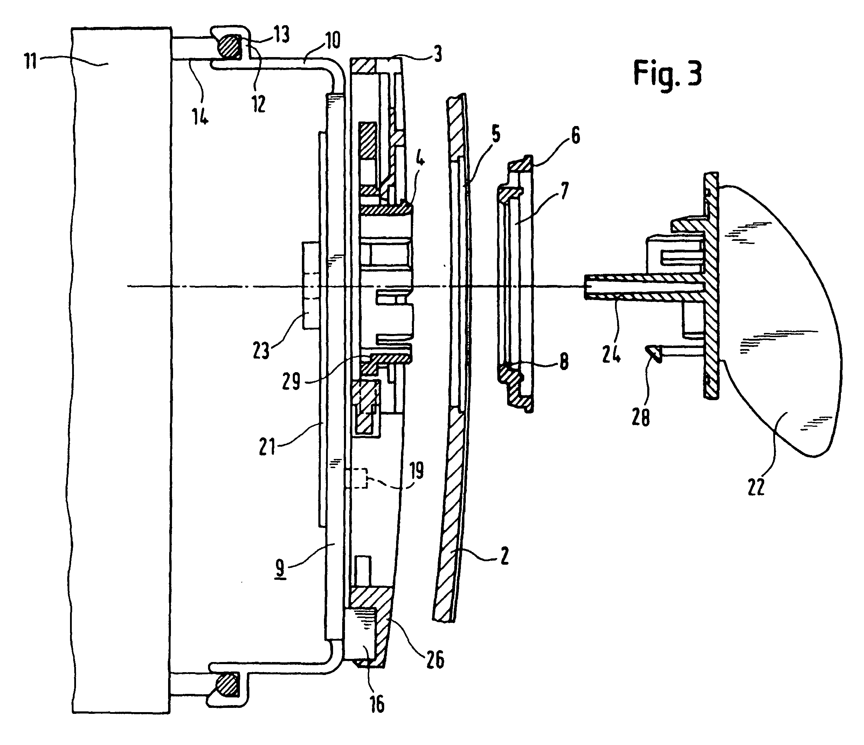

- Fig. 3: in explodierter Schnittdarstellung die Anordnung eines Trägerteiles an einer Küchenmaschine und

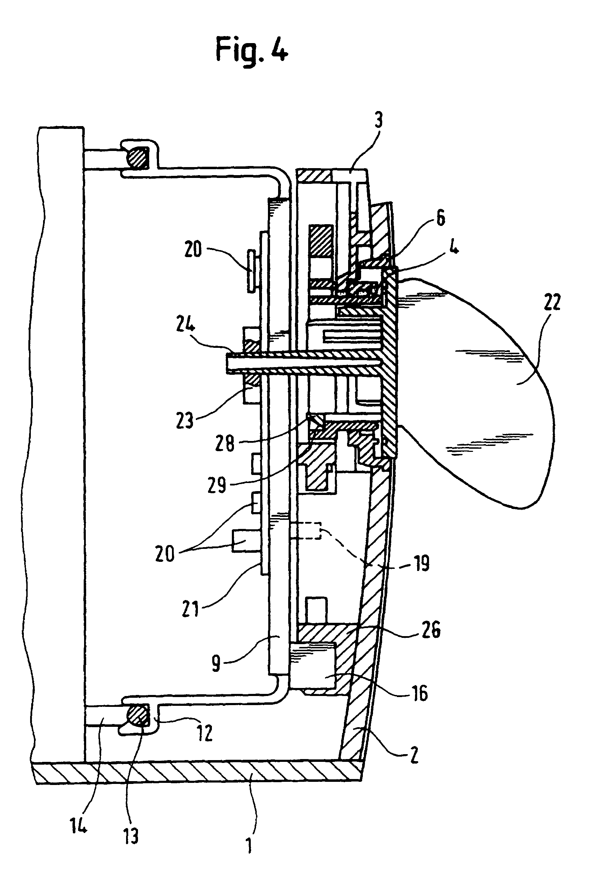

- Fig. 4: die Anordnung nach Fig. 3 im zusammengefügten Zustand.

Mit 1 ist das eine Gehäuseteil (Gehäuseunterteil) einer Küchenmaschine bezeichnet. Auf das Gehäuseunterteil 1 ist zur Vervollständigung des Gehäuses der Küchenmaschine ein anderes Gehäuseteil 2 (Gehäuseoberteil) aufgesetzt und mit dem Gehäuseunterteil 1 verbunden. An dem Gehäuseoberteil 2 ist ein im unteren Bereich annähemd die Form eines Y aufweisendes Ausrichtelement 3 angebracht. Das Ausrichtelement 3 ist als gesondertes Bauteil ausgeführt und an dem Gehäuseoberteil 2 befestigt.

An dem Ausrichtelement 3 sind vorstehende Rastnasen 4 vorhanden, die in eine Montageöffnung 5 des Gehäuseoberteiles 2 eingeführt werden können. Die Befestigung des Ausrichtelementes 3 an dem Gehäuseoberteil 2 erfolgt dann mittels eines Montageringes 6, der mit einer an seiner Innenöffnung 7 umlaufenden Rastkante 8 mit den Rastnasen 4 verrastbar ist. An seinem Außenumfang weist der Montagering 6 eine mit der Kontur des Innenumfanges der Montageöffnung 5 zusammenpassende Außenkontur auf. Nach dem Verrasten des Montageringes 6 mit den Rastnasen 4 liegt der Montagering 6 in der Montageöffnung 5 an und hält somit das Ausrichtelement 3 an dem Gehäuseoberteil 2.

Ein rahmenartig ausgebildetes Trägerteil 9 ist mittels federnder Tragarme 10 an einem mit dem Gehäuseunterteil 1 verbundenen Antriebsmotor 11 befestigt. Das Trägerteil 9 ist somit indirekt mit dem Gehäuseunterteil 1 verbunden. Je nach konstruktiver Gestaltung des Gerätes kann das Trägerteil 9 auch direkt an dem Gehäuseunterteil 1 angebracht werden. Die Tragarme 10 sind hierzu mit einer an ihrem freien Ende ausgebildeten Klaue 12 jeweils auf den U-Schenkel 13 eines U-förmigen, an der Außenseite des Antriebsmotors 11 abstehenden Hakens 14 aufgeschnappt. Die Länge des U-Schenkets 13 ist größer als die Breite der Klaue 12 bemessen, so daß die Tragarme 10 auf dem U-Schenkel 13 in waagerechter Richtung verschoben werden können.

An dem unteren Querstab 15 des Trägerteiles 9 ist ein mit Einlaufschrägen 16 versehener Schacht 17 angeformt. An den beiden seitlichen, senkrecht verlaufenden Stäben 18 des Trägerteiles 9 sind aus der Ebene des Trägerteiles 9 vorstehende Stifte 19 vorgesehen, die zusammen mit dem Schacht 17 Gegenausrichtelemente bilden.

Weiterhin ist an der Rückseite des Trägerteiles 9 eine elektrische Steuerelemente 20 tragende Leiterplatte 21 angeordnet. Außerdem befindet sich auf dieser Leiterplatte 21 ein mittels eines Schaltknebels 22 betätigbares, als Ein- Ausschalter wirkendes Steuerglied 23. Der Schaltknebel 22 greift mit seiner Schaltachse 24, die einen eckige Querschittsform aufweist, in eine Einstecköffnung 25 des Steuergliedes 23 ein, die eine der Querschittsform der Schalterachse 24 entsprechende Querschittsform aufweist. Damit kann das Steuerglied 23 durch entsprechende Drehbewegungen des Schaltknebels 22 verstellt werden. Da das Trägerteil 9 an dem Antriebsmotor 11 gehattert ist, können die zwischen dem Antriebsmotor 11 und dem auf der Leiterplatte 21 angeordneten Steuerglied 23 sowie den Steuerelementen 20 notwendigen elektrischen Verbindungen ohne Schwierigkeiten hergestellt werden. Dies wird insbesondere dadurch erleichtert, daß der auf dem Gehäuseunterteil 1 angeordnete Antriebsmotor 11 und das Trägerteil 9 vor dem Anbringen des Gehäuseoberteiles 2 frei zugänglich sind.

Da das Steuerglied 23 über das Trägerteil 9 und den Antriebsmotor 11 letztlich am Gehäuseunterteil 1 angebracht ist, kommt es in der Regel wegen Fertigungsungenauigkeiten zu Problemen beim Ankoppeln des am Gehäuseoberteil 2 angeordneten Schaltknebels 22. Um dies zu vermeiden sind an dem Gehäuseoberteil 2 das Ausrichtelement 3 und an dem Trägerteil 9 die entsprechenden Gegenausrichtelemente, nämlich der Schacht 17 und die Stifte 19, vorgesehen. Damit diese Elemente beim Aufsetzen des Gehäuseoberteiles 2 auf das Gehäuseunterteil 1 auch sicher in Eingriff kommen und somit die erforderliche Ausrichtung der Teile zueinander bewirkt werden kann, sind die am Trägerteil 9 angebrachten Tragarme 10 so gestaltet, daß das Trägerteil 9 nach dem Aufschnappen der Tragarme 10 auf die U-förmigen Haken 14 eine Lage einnimmt, die gegenüber der Lage , die das Trägerteil 9 nach dem Aufsetzen des Gehäuseoberteiles 2 auf das Gehäuseunterteil 1 einnehmen muß, etwas angehoben ist.

Beim Aufsetzen des Gehäuseoberteiles 2 trifft die Nase 26 des Ausrichtelementes 3 entweder direkt auf den Schacht 17 oder auf dessen Einlaufschrägen 16. Im erstgenanten Fall befindet sich das Trägerteil 9 in waagerechter Richtung bereits in der richtigen Stellung. Im letztgenannten Fall wird das Trägerteil 9 durch das Entlanggleiten der Nase 26 an den Einlaufschrägen 16 auf den U-Schenkeln 13 in waagerechter Richtung soweit verschoben, daß die Nase 26 mit dem Schacht 17 zur Deckung kommt und in diesen eindringen kann. Außerdem werden beim Aufsetzen des Gehäuseoberteiles 2 die Y-Arme 27 des Ausrichtelementes 3 pfeilartig zwischen die Stifte 19 geschoben und treffen auf diese auf. Da das Trägerteil 9, wie bereits erwähnt, im vormontierten Zustand eine Lage einnimmt, die gegenüber der Lage im fertig montierten Zustand des Gerätes angehoben ist, wird das Trägerteil 9 durch die beim Aufsetzen des Gehäuseoberteiles 2 auf die Stifte 19 auftreffenden Y-Arme 27 nach unten gedrückt. Damit wird das Trägerteil 9 durch das die Y-Arme aufweisende und an der Montageöffnung 5 befestigte Ausrichtelement 3 auch höhenmäßig exakt auf die Montageöffnung 5 des Gehäuseoberteiles 2 hin ausgerichtet.

Infolge dieser beim Aufsetzen des Gehäuseoberteiles 2 erfolgenden exakten Ausrichtung des Trägerteiles 9 kann dann der Schaltknebel 22 mit seiner Schalterachse 24 ohne Schwierigkeiten in die Einstecköffnung 25 des am Trägerteil 9 angeordneten Steuergliedes 23 eingesteckt werden. Der Schaltknebel 22 verrastet dabei mit an ihm angeformten Rasthaken 28 hinter einer am Ausrichtelement 3 vorgesehenen Umlaufkante 29. Durch die direkte Befestigung des Schaltknebels 22 an dem Ausrichtelement 3 werden Toleranzen, die beim Anbringen des Ausrichtelementes 3 in der Montageöffnung 5 des Gehäuseoberteiles 2 auftreten können umgangen.

Wie die Ausführungen zeigen, wird durch die beschriebene Gestaltung eines Haushaltsgerätes sowohl ein erleichtertes Herstellen der elektrischen Verbindungen zwischen dem Steuerglied und dem Arbeitselement (Antriebsmotor) als auch ein einwandfreies Ankoppeln des Betätigungselementes (Schaltknebel 22) an das Steuerglied 23 erzielt.

## Patentansprüche

1. Haushaltsgerät, insbesondere Küchenmaschine, das ein aus mindestens zwei zusammenfügbaren Gehäuseteilen (1 und 2) bestehendes Gehäuse aufweist, in dem ein elektrisches Arbeitselement (11), wie ein Motor, Heizwendeln oder dergleichen eingebaut ist, dessen elektrischer Kreis ein durch ein außen am Gehäuse angeordnetes Betätigungselement (22) betätigbares Steuerglied (23) wie einen Schalter oder dergleichen, enthält, **dadurch gekennzeichnet, daß** das Steuerglied (23) an einem schwimmend direkt oder indirekt an dem einen Gehäuseteil (1) angeordneten Trägerteil (9) befestigt ist, daß an dem anderen Gehäuseteil (2) mindestens ein Ausrichtelement (3) vorgesehen ist, welches beim Zusammenfügen der Gehäuseteile (1 und 2) mit einem am Trägerteil (9) vorhandenen Gegenausrichtelement (17;19) in Eingriff kommt, daß die Lage des Ausrichtelementes (3) an dem anderen Gehäuseteil (2) in Bezug zu einer an diesem Gehäuseteil (2) für das Anbringen des Betätigungselementes (22) vorgesehenen Montageöffnung (5) steht.

2. Haushaltsgerät nach Anspruch 1, **dadurch gekennzeichnet, daß** die schwimmende Befestigung des Trägerteils (9) zumindest in Fügerichtung der Gehäuseteile (1, 2), elastisch auslenkbar ausgebildet ist

3. Haushaltsgerät nach Anspruch 1 oder 2, **dadurch gekennzeichnet, daß** das Trägerteil (9) in Aufsteckrichtung des anderen Gehäuseteiles(2) federnd und in der um 90° gegen die Aufsteckrichtung versetzten Richtung verschieblich gelagert an dem einen Gehauseteil (1) angeordnet ist.

4. Haushaltsgerät nach einem der Ansprüche 1 bis 3, **dadurch gekennzeichnet, daß** an dem Trägerteil (9) als Gegenausrichtelement ein mit Zentrierschrägen (16) versehener Schacht (17) vorgesehen ist, dessen Lage in Bezug zu dem an dem Trägerteil (9) angeordneten Steuerglied (23) steht, daß femer an dem anderen Gehäuseteil (2) als Ausrichtelement eine nasenförmige, in den Schacht (17) passende Leiste (26) vorgesehen ist.

5. Haushaltsgerät nach Anspruch 4, **dadurch gekennzeichnet, daß** an dem Trägerteil (9) als weitere Gegenausrichtelemente aus der Ebene des Trägerteiles (9) vorstehende stiftartige Vorsprünge (19) vorgesehen sind, deren Lage ebenfalls in Bezug zu der Lage des Steuergliedes (23) steht, daß an dem anderen Gehäuseteil (2) schräg verlaufende Leisten (27) vorgesehen sind, die beim Zusammenfügen der beiden Gehäuseteile pfeilartig zwischen die stiftartigen Vorsprünge (19) greifen und an diesen entlanggleiten.

6. Haushaltsgerät nach einem der vorhergehenden Ansprüche, **dadurch gekennzeichnet, daß** das Trägerteil (9) mindestens drei in Aufsteckrichtung des anderen Gehäuseteiles federnd ausgebildete Tragarme (10) aufweist, die in der zu der Aufsteckrichtung um 90° versetzten Richtung verschiebbar an dem einen Gehäuseteil (1) befestigt sind.

7. Haushaltsgerät nach einem der vorhergehenden Ansprüche, **dadurch gekennzeichnet, daß** an dem Trägerteil (9) eine das Steuerglied (23) enthaltende Leiterplatte (21) angebracht ist.

8. Haushaltsgerät nach Anspruch 7 mit einem an dem einen Gehäuseteil angebauten Antriebsmotor (11) als elektrisches Arbeitselement, **dadurch gekennzeichnet, daß** das Trägerteil (9) an der Außenseite des Antriebsmotors (11) angeordnet ist.

9. Haushaltsgerät nach einem der vorhergehenden Ansprüche, **dadurch gekennzeichnet, daß** an dem anderen Gehäuseteil (2) ein gesondertes, als Ausrichtelement (3) dienendes Bauteil vorgesehen ist, welches in seiner Lage an dem anderen Gehäuseteil (2) auf die Montageöffnung (5) für das Betätigungselement (22) hin ausgerichtet ist.

10. Haushaltsgerät nach Anspruch 9, **dadurch gekennzeichnet, daß** das Bauteil (3) mittels entsprechender Rastelemente (4) in der Montageöffnung (5) gehalten ist.

11. Haushaltsgerät nach Anspruch 10, **dadurch gekennzeichnet, daß** das Betätigungselement (22) von der Außenseite des Gehäuses (1 und 2) her in der Montageöffnung (5) direkt mit dem Bauteil (3) verbindbar ist.

12. Haushaltsgerät nach Anspruch 11, **dadurch gekennzeichnet, daß** das Betätigungselement (22) durch eine Rastverbindung mit dem Bauteil (3) verbindbar ist.

## Claims

1. Domestic appliance, particularly kitchen machine, comprising a housing, which consists of at least two housing parts (1 and 2) able to be joined together and in which an electric operating element (11) such as a motor, heating coils or the like is installed, the electrical circuit of which contains a control element (23), such as a switch or the like, actuable by an actuating element (22) arranged externally at the housing, **characterised in that** the control element (23) is fastened to a carrier member (9) arranged in floating manner directly or indirectly at one housing part (1), that at least one aligning element (3), which on joining together the housing parts (1 and 2) comes into engagement with a counter-aligning element (17; 19) present at the carrier member (9), is provided at the other housing part (2) and that the position of the aligning element (3) at the other housing part (2) is disposed with respect to a mounting opening (5) provided at this housing part (2) for mounting of the actuating element (22).

2. Domestic appliance according to claim 1, **characterised in that** the floating fastening of the carrier member (9) is constructed to be resiliently deflectable in at least in the direction of joining of the housing parts (1, 2).

3. Domestic appliance according to claim 1 or 2, **characterised in that** the carrier member (9) is arranged at the one housing part (1) to be resilient in the direction of insertion of the other housing part (2) and to be slidingly mounted in the direction offset by 90° relative to the direction of insertion.

4. Domestic appliance according to one of claims 1 to 3, **characterised in that** provided at the carrier member (9) as counter-aligning element is a shaft (17), which is provided with centring chamfers (16) and the position of which is disposed with respect to the control element (23) arranged at the carrier member (9), and that in addition provided at the other housing part (2) as aligning element is a lug-shaped strip (26) fitting in the shaft (17).

5. Domestic appliance according to claim 8, **characterised in that** provided at the carrier member (9) as further counter-aligning elements are pin-like projections (19), which protrude from the plane of the carrier member (9) and the position of which is similarly disposed with respect to the position of the control element (23), and that provided at the other housing part (2) are obliquely extending strips (27) which on joining together of the two housing parts engage in arrow-like manner between the pin-like projections (19) and slide along these.

6. Domestic appliance according to one of the preceding claims, **characterised in that** the carrier member (9) comprises at least three carrier arms (10) which are resiliently constructed in the direction of insertion of the other housing part and which are fastened to the one housing part (1) to be displaceable in the direction offset by 90° with respect to the direction of insertion.

7. Domestic appliance according to one of the preceding claims, **characterised in that** a circuitboard (21) containing the control element (23) is mounted at the carrier member (9).

8. Domestic appliance according to claim 7 with a drive motor (11), which is mounted at the one housing part, as electric operating element, **characterised in that** the carrier member (9) is arranged at the outer side of the drive motor (11).

9. Domestic appliance according to one of the preceding claims, **characterised in that** provided at the other housing part (2) is a separate component which serves as aligning element (3) and which is aligned in its position at the other housing part (2) with the mounting opening (5) for the actuating element (22).

10. Domestic appliance according to claim 9, **characterised in that** the component (3) is retained in the mounting opening (5) by means of corresponding detent elements (4).

11. Domestic appliance according to claim 10, **characterised in that** the actuating element (22) is directly connectible with the component (3), from the outer side of the housing (1 and 2), in the mounting opening (5).

12. Domestic appliance according to claim 11, **characterised in that** the actuating element (22) is connectible with the component (3) by a detent connection.

## Revendications

1. Appareil électroménager, en particulier robot ménager, qui présente un boîtier constitué d'au moins deux parties (1 et 2) pouvant être assemblées, dans lequel est monté un élément de travail électrique (11), comme un moteur, des filaments de chauffage ou similaires, dont le circuit électrique contient un organe de commande (23), comme un commutateur ou similaire, pouvant être actionné par un élément d'actionnement (22) monté à l'extérieur sur le boîtier, **caractérisé en ce que,** l'organe de commande (23) est fixé à une pièce porteuse (9) montée flottante directement ou indirectement sur une partie du boîtier (1), **en ce que** sur l'autre partie du boîtier (2) au moins un élément d'alignement (3) est prévu, qui, lors de l'assemblage des éléments du boîtier (1 et 2), engrène dans un élément d'alignement contraire (17 ; 19) présent sur la pièce porteuse (9), **en ce que** la position de l'élément d'alignement (3) sur l'autre partie du boîtier (2) est en rapport avec un orifice de montage (5) prévu sur cette partie du boîtier (2) pour le montage de l'élément d'actionnement (22).

2. Appareil électroménager selon la revendication 1, **caractérisé en ce que** la fixation flottante de la pièce porteuse (9) est conçue de manière articulée élastiquement au moins dans la direction d'assemblage des parties du boîtier (1, 2).

3. Appareil électroménager selon la revendication 1 ou 2, **caractérisé en ce que**, la pièce porteuse (9) est montée sur l'une des parties du boîtier (1) de manière élastique dans le sens de l'enfichage de l'autre partie du boîtier (2) et logée de manière mobile dans la direction décalée de 90° par rapport au sens de l'enfichage.

4. Appareil électroménager selon l'une des revendications 1 à 3, **caractérisé en ce que** un regard (17) pourvu de chanfreins de centrage (16) est prévu comme élément d'alignement contraire sur la pièce porteuse (9), dont la position est en rapport avec l'organe de commande (23) monté sur la pièce porteuse (9), **en ce que** une bordure (26) en forme de talon adapté au regard (17) est prévue comme élément d'alignement à l'autre partie du boîtier (2).

5. Appareil électroménager selon la revendication 4, **caractérisé en ce que** des éléments en saillie (19) en forme de broche en porte-à-faux par rapport au plan de la pièce porteuse (9) sont prévus comme éléments d'alignement contraires supplémentaires sur la partie porteuse (9), dont la position est également en rapport avec la position de l'organe de commande (23), **en ce que** des bordures (27) au tracé oblique sont prévues sur l'autre partie du boîtier (2), qui engrènent en forme de flèche entre les éléments en saillie en forme de broche (19) lors de l'assemblage des deux parties du boîtier et coulissent le long de ceux-ci.

6. Appareil électroménager selon l'une des revendications précédentes, **caractérisé en ce que**, la pièce porteuse (9) présente au moins trois consoles (10) conçues de manière élastique dans le sens d'enfichage de l'autre partie du boîtier, qui sont fixées de manière mobile sur l'une des parties du boîtier (1) dans la direction décalée de 90° par rapport au sens d'enfichage.

7. Appareil électroménager selon l'une des revendications précédentes, **caractérisé en ce que** une carte à circuits imprimés (21) contenant l'organe de commande (23) est montée sur la pièce porteuse (9).

8. Appareil électroménager selon la revendication 7, comportant comme élément de travail électrique un moteur de commande (11) monté sur l'une des parties du boîtier, **caractérisé en ce que** la pièce porteuse (9) est montée à la face extérieure du moteur de commande (11).

9. Appareil électroménager selon l'une des revendications précédentes, **caractérisé en ce que** un composant séparé servant d'élément d'alignement (3) est prévu sur l'autre partie du boîtier (2), dont la position sur l'autre partie du boîtier (2) est alignée sur l'orifice de montage (5) pour l'élément d'actionnement (22).

10. Appareil électroménager selon la revendication 9, **caractérisé en ce que** le composant (3) est maintenu dans l'orifice de montage (5) par des éléments encliquetables (4) correspondants.

11. Appareil électroménager selon la revendication 10, **caractérisé en ce que** l'élément d'actionnement (22) peut être raccordé directement aux composants (3) dans l'orifice de montage (5) par la face extérieure du boîtier (1 et 2).

12. Appareil électroménager selon la revendication 11, **caractérisé en ce que** l'élément d'actionnement (22) peut être raccordé au composant (3) par une liaison d'enclenchement.
